# EUROPEAN PATENT APPLICATION

(11) **EP 2 450 804 A1**
(43) Date of publication of application: **09.05.2012**
(21) Application number: 10194606.9
(22) Date of filing: 10.12.2010
(51) Int. Cl.: G06F 17/30

(54) **Apparatus, and associated method, for establishing a prioritized media-file playlist at media device**

(30) Priority: 01.11.2010 US 917105
(71) Applicant: Research In Motion Limited, Waterloo, ON N2L 3W8 (CA)
(72) Inventor: Bernhardt, Bruce Allen, Rolling Meadows, IL 60008 (US)
(74) Representative: Phillips, Emily Elizabeth

(57) **Abstract**

An apparatus, and an associated method, facilitates selection of a media file for play-out at a media player, such as a media player forming part of a wireless device. Prioritization criteria is used to prioritize a plurality of media files according to a prioritization criteria. And, once prioritized, a playlist is established. The playlist is used in the selection of a media file to be played out at the media-file player.

## Description

The present disclosure relates generally to a manner by which to order play-out of digital media files, such as podcasts, at a wireless station or other electronic device. More particularly, the present disclosure relates to an apparatus, and an associated method, by which to prioritize the digital media files and to establish a playlist, ordered responsive to the prioritization of the digital media files.

A listener or viewer of the files is presented with the playlist. The playlist is ordered in a sequence according to a prioritization criteria, to provide for play-out in an order preferred by the user or to facilitate selection by a user of a media file identified in the play list for play-out at the electronic device. Dynamic re-prioritization of media files is also provided in the event that additional media files become available after initial prioritization and playlist establishment.

### Background

Recent years have witnessed the development, deployment, and widespread usage of many new types of electronic devices. A wide array of services and functions is provided by the devices. And their use to perform the services and functions is now readily available. Devices that provide for communication services and for the conveyance of informational content are exemplary of such new devices.

Cellular communication systems, for instance, were relatively unknown little more than a generation ago. But, now, cellular communication systems have been deployed over significant portions of the populated areas of the world and used by many on a regular basis. Early-generation systems provided primarily for voice communications and provided limited data communication services. New-generation systems provide, in addition to voice communications, data communication services, which communicate large amounts of data. Cellular communications systems, in general, are constructed in manners to permit low-power signals to be utilized. Through use of low-power signals, the same frequencies can be reused in areas relatively close to one another. Radio-spectrum bandwidth allocated to a cellular communication system is thereby efficiently utilized.

Other wireless communication systems have been developed and deployed that include various of the features of cellular communication systems and are sometimes used in conjunction therewith. Wireless local area networks (WLANs), for instance, are also widely utilized, both for the communication of voice information as well as data information. Achievable data rates in a WLAN sometimes approach, or even exceed, the data rates available in conventional, wired networks. And, new-generation, cellular communication systems sometimes also provide for high data-rate communications.

Data media files, such as podcasts, have been conventionally communicated in wired, communication networks to provide a receiving device, such as a media player, which receives the data media files. Once a media file has been delivered to a receiving device, the content-recipient device, with the media file is played-out at the election of the user. With the deployment of wireless communication systems that provide for the communication of data at high data rates, wireless devices operable therein have also been developed and are regularly used to receive podcasts, and other digital media files, by way of radio connections provided in such wireless communication systems. In similar manner, a user of such a device is able to play-out a podcast or other media file at any time at the election of the user of the device.

As consumers increasingly make use of content of this type, downloaded to a content-recipient device and available for subsequent play-out, increased numbers of content providers make content available in this type of format. And, the increase in the amount and variety of media files that are available also increases the number of content recipients that request delivery of the media files.

A data media file delivered to a content-recipient device is typically stored at the device until election is made by a user to play-out the media file. The storage capacity of a content-recipient device is sometimes large, and a large number of media files are provided to, and stored at, the device, available for subsequent play-out upon the election of a user. Additionally, subscription might be made, such as by a user of the device, to have automatic delivery of content to the device. For instance, some content providers generate podcasts on a regular basis, such as daily or other scheduled frequency. The number of media files communicated to, and maintained at, the device thereby increases without further action taken by the user of the device.

File management and other issues associated with storing large numbers of media files at the device, if not properly addressed, can quickly become unwieldy and difficult to manage.

It is in light of this background information related to devices capable of storing data media files that the significant improvements of the present disclosure have evolved.

### Brief Description of the Drawings

Figure 1 illustrates a functional block diagram of a communication system having a wireless device that operates pursuant to an implementation of the present disclosure.

Figure 2 illustrates an exemplary screen display generated pursuant to operation of an implementation of the present disclosure.

Figure 3 illustrates another, exemplary screen display, also generated pursuant to operation of an implementation of the present disclosure.

Figure 4 illustrates a process diagram representative of the process of operation of an implementation of the present disclosure.

Figure 5 illustrates a method flow diagram representative of the method of operation of an implementation of the present disclosure.

### Detailed Description

The present disclosure, accordingly, advantageously provides an apparatus, and an associated method, by which to order the play-out of digital media files, such as podcasts, at a wireless station or other electronic device.

Through operation of an implementation of the present disclosure, a manner is provided by which to prioritize the digital media files and to establish a playlist, ordered responsive to the prioritization of the digital media files.

In one aspect of the present disclosure, a listener or viewer of the files is presented with the playlist, which has an ordered listing of media files. The playlist is ordered in a sequence according to a prioritization criteria, to provide for play-out in an order preferred by the user.

In another aspect of the present disclosure, the prioritization criteria is used to prioritize plurality of digital media files. The prioritization criteria is, e.g., manually-selected. That is to say, the prioritization criteria, is entered by a user, or another, manually. Selection is entered, e.g., at the device or elsewhere and then provided to the device. The manually-selected, prioritization criteria establishes the criteria by which a plurality of digital media files are ordered, or otherwise prioritized.

In another aspect of the present disclosure, the prioritization criteria is automatically selected. When automatically selected, the prioritization criteria need not rely upon manual entry, or other selection, of prioritization criteria. Rather, the selection of the prioritization criteria is automatic, free of a requirement of any specific entry of the selection by a user or another who manually enters the selection. The automatic selection of the prioritization criteria provides for corresponding automatic prioritization of the plurality of digital media files. And, the automatic selection of the polarization criteria establishes the criteria by which the prioritization of the digital media files are ordered or otherwise prioritized.

**In** another aspect of the present disclosure, a monitor is further provided. The monitor monitors operation of an electronic device, e.g., to identify media files that are played-out at the device. That is to say, the monitor monitors media-file play-out of the media files in order to obtain a history of media files that are played-out. The history of prior, played-out media files provides a prior play-out popularity indicia that, in one implementation, forms prioritization criteria that is used to prioritize the plurality of digital media files. In one implementation, the monitor further monitors the availability of additional media files, such as when an additional podcast or other media files is downloaded. And, responsive thereto, the monitor further provides for reprioritization of the media files to take into account the additional media-file availability.

In another aspect of the present disclosure, a playlister is configured to establish a media-file playlist. The media-file playlist is established with the prioritization of the media files provided by a prioritizer. The playlist comprises a listing of media files in a sequence that establishes an ordered sequence of digital media files that defines the order of play-out of the files. The media-file playlist is presented to a user to provide a user with an indication of the ordered playlist. The user is able then to select for play-out digital media files contained in the playlist. As the playlist contains an order sequence of media-file identities, the user is able to make selection therefrom and to be provided with identification of the media files that are of highest priority, determined pursuant to the criteria established in the prioritization criteria. Or, if play-out of the files is automatic, play-out is performed in an order defined by the playlist.

In another aspect of the present disclosure, a user interface is provided by which to indicate to a user of an electronic device a media-file playlist available to be played-out at the electronic device. The user interface includes a display screen for displaying the media-file playlist, or at least a portion thereof. The media-file playlist is an ordered listing of media files prioritized pursuant to a prioritization criteria. The display screen provides for election by a user of a media file to be played-out at the electronic device. Or, if the play-out is automatic, the identity of the media file that is being played-out is identified. The user interface further provides for input or other entry of selection by the user of which of the media files in the playlist to play-out. And, the user interface further provides for input selection of prioritization criteria prior to creation of the playlist.

In one implementation, the electronic device comprises a cellular mobile station, or other wireless device, that has the capability of having podcasts, or other digital media files, downloaded thereto. Prioritization criteria is used to prioritize the media files stored, or otherwise maintained, at the wireless device. And, a playlist of the media files is established using the prioritization of the media files. The playlist is displayed to a user to provide for selection thereform. Or, play-out of the media files in the order defined by the playlist is automatically carried out.

In these and other aspects, therefore, an apparatus, and an associated method, is provided for an electronic device. The electronic device is capable of playing-out a digital media file of a plurality of digital media files. A prioritizer is configured to prioritize the plurality of digital media files according to a selected prioritization criteria. And, a playlister is configured to establish a media-file playlist of the digital media files for presentation responsive to prioritization of the digital files by the prioritizer.

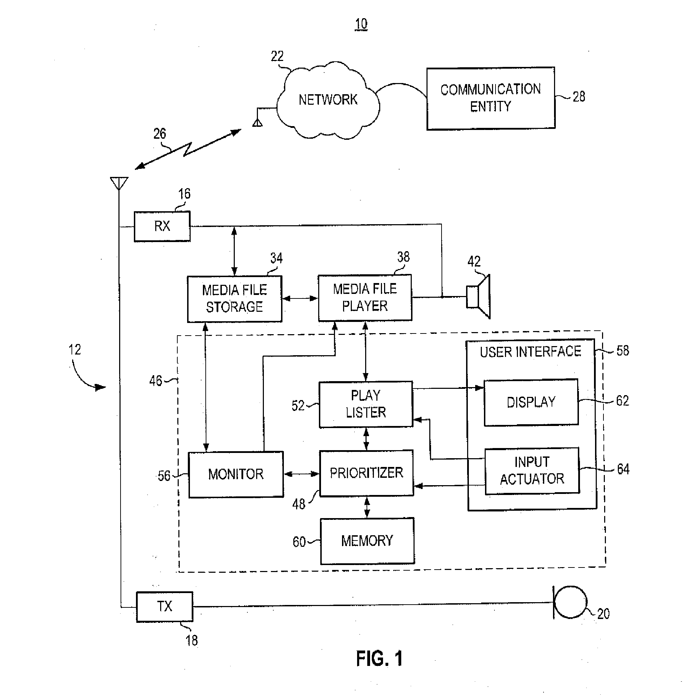

Turning first, therefore, to Figure 1, a communication system, shown generally at 10, provides for communications with wireless devices, of which the wireless device 12 is representative. The communication system 10, in the exemplary implementation, comprises a cellular communication system. The communication 10, however, is also representative of any of various other radio, and other, communication systems in which information is communicated to, with, or from a communication device. Additionally, while an implementation of the present disclosure is described with respect to use at a communication device, such as the wireless device 12, in other implementations, an implementation of the present disclosure is embodied in other types of electronic devices, including stand-alone devices, such as standalone media-file players or other electronic devices. Accordingly, while the following description shall describe exemplary operation of an implementation corresponding to that shown in Figure 1, in other implementations, operation is provided at other types of devices. Accordingly, while the following description is made with respect to the exemplary implementation showing in Figure 1, the description should be considered to be merely an example of describing operation.

The wireless device 12 includes transceiver circuitry, here represented by a receive (Rx) part 16 and a transmit (Tx) part 18. The transmit part is coupled to a microphone 20. The transceiver circuitry of the wireless device operates to transceive communication signals with a network part 22 of the communication system by way of radio channels defined upon a radio air interface 26. A communication entity 28, placed in communication connectivity with the network 22, is representative of a communication endpoint with which the wireless device 12 communicates. The communication entity 28 comprises, for example, a data server that sources, or otherwise stores, data media files, such as podcasts.

A digital media file sourced at the communication entity 28 is, for example, downloadable to the wireless device 12 by way off the network 22 and the radio air interface 16. When delivered to the wireless device, the receive part 16 of the transceiver circuitry detects the delivered content and the delivered, media file is stored at a media file storage element 34. The media file is thereafter available to be played-out by a media file player 38. In one implementation, the media file player also is capable of streaming operation, i.e., immediate play-out of a media file as the media file is received at the device 12. When the media file comprises an audio-only media file, the media file content is transduced into human perceptible form at the speaker 42.

As mentioned previously, the device 12 is typically capable of storing a large number of media files, and selection of which file to play-out is, in conventional implementations, sometimes cumbersome. Additionally, some podcasts, and other media files, are time-sensitive. That is to say, the significance of a particular file lessens over time and the importance of the file to the user is time-dependent. This aspect further complicates selection by a user of the media file from amongst a plurality of media files for play-out.

The device 12, pursuant to an implementation of the present disclosure, further includes an apparatus 46. The apparatus is functionally represented, and the functions performed by the various elements of the apparatus 46 are carried out in any desired manner, including, for instance, hardware devices, algorithms executable by processing circuitry, and combinations and variants thereof. In the implementation shown in Figure 1, the apparatus 46 includes a prioritizer 48, a playlister 52, a monitor 56, a user interface 58, and a memory element 60.

The user interface is here shown to include a display 62 and an input actuator 64. In one implementation, the user interface comprises an interactive, touch display screen. In other implementations, the user interface is implemented in other manners and is sometimes constructed to include the speaker 42 and the microphone 20.

In operation, the prioritizer 48 prioritizes the media files that are potentially available for play-out by the media file player 38. Here, the prioritizer is provided with identification, and other, information related to the media files stored at the media file storage element 34. The prioritizer prioritizes the media files according to a prioritization criteria. The prioritization criteria comprises a selected criteria, selected in any of various manners. In one implementation, the prioritization criteria is manually selected. In an alternate implementation, the prioritization criteria is automatically selected. And, in one implementation the media files are prioritized into prioritization groups, e.g., a group of prioritization level one, a group of prioritization level two, etc.

When manually-selected, selection requires entry of the criteria, such as by a user of the device 12. The user here manually enters the prioritization criteria through actuation of the input actuator 64. Indications of the selection are provided to the prioritizer 48, and the prioritizer prioritizes the media files in conformity with the selected criteria. Manual selection, in an alternate implementation, is made elsewhere, such as with an entity connected to the network 22, and delivered to the device 12 and the prioritizer 48.

Automatically-selected prioritization criteria obviates the need for manual entry of the criteria selections. When the prioritization criteria is automatically selected, the prioritization criteria is selected or otherwise obtained automatically and then used by the prioritizer to prioritize the media files.

In one implementation, the prioritization criteria is stored, here at the memory element 60. The prioritization criteria is retrieved therefrom when needed by the prioritizer to perform the prioritizations. In an alternate implementation, the selected prioritization criteria is based upon monitor results of monitoring performed by the monitor 56. The monitor here monitors operation of the media file player 38 and provides indications of the monitor results to the prioritizer, here in the form of the selected prioritization criteria. The prioritization criteria, e.g., causes the prioritizer to prioritize the media files responsive to past popularity of the media files, or similar media files, such as media files sourced at the same media-file source. And, in one implementation, prior-played media files are caused to be disincluded, i.e., precluded from inclusion in the prioritization performed by the prioritizer, In a further implementation, the monitor 56 further monitors for the availability of an additional media file or files. An additional media file becomes available, for instance, when downloaded to the device to the device 12 and stored at the file storage element 34. Upon detection of the additional media-file availability, the monitor causes further prioritization, i.e., reprioritization, operations to be performed to take into account the additional media-file availability. The re-prioritization operation is carried out when desired, e.g., immediately or at some subsequent time or responsive to an additional triggering event.

The prioritization performed by the prioritizer is provided to the playlister 52. The playlister establishes a media-file playlist responsive to the prioritization provided by the prioritizer. The playlist comprises a listing of the media files available to be played-out at the media file player in an ordered sequence, ordered in conformity with the prioritization provided by the prioritizer. The playlist includes all of the media files available to be played-out, or a portion thereof, such as a selected number of highest-listed, i.e., highest-prioritized, media files, And, in one implementation, media files are removed from inclusion in the playlist, such as responsive to prior play-out of the media file, and do not form part of the playlist.

An indication of the playlist created by the playlister is provided to the user interface 58. And, the playlist, or a portion thereof, is displayed, thereby to identify to a user of the device an indication of the playlist. The user makes selection from the playlist, such as by way of the input actuator 64, of a selected media file, or series of media files that are to be played-out. Because the playlist that is displayed is an ordered sequence, prioritized in conformity with prioritization criteria, the displayed list is displayable in a manner in which the highest-priority media files are first-noticed by the user of the device.

Responsive to the selection of a media file for play-out by the user, the media file player is caused to retrieve the selected media file, or files, stored at the media file storage or elsewhere, and to play-out the selected files. Here, the actuation indication is provided to the playlister 52, and the playlister instructs the media file player to retrieve and play-out the selected files. In an implementation in which the media file comprises a multimedia file, audio portions of the media file are provided to the speaker 42, and video portions of the media file are provided to the display 62.

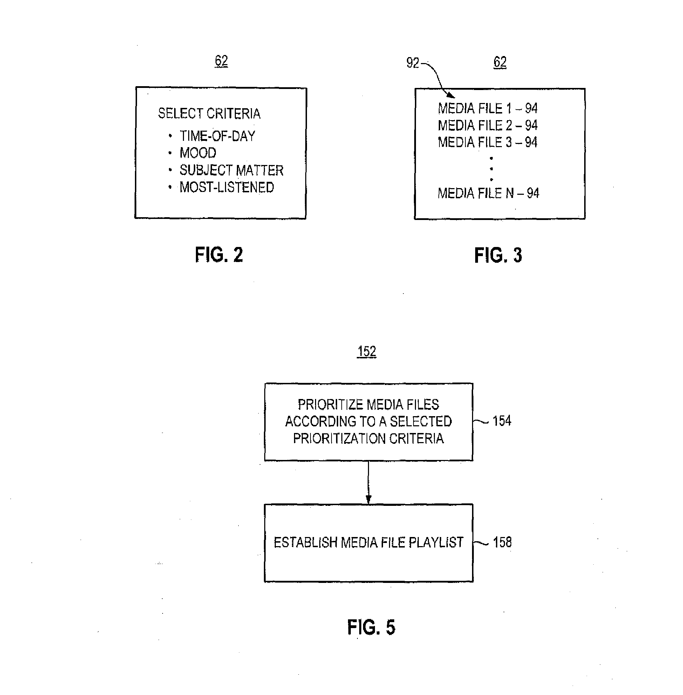

Figure 2 illustrates an exemplary screen display displayable upon the display 62 during operation of an implementation of the present disclosure. Here, the screen display comprises a selection menu that provides for manual selection of prioritization criteria. The display is displayed upon the display screen upon selection by the user to manually select the prioritization criteria. Upon such selection, the selected criteria display screen, shown in Figure 2, is displayed at the display 62. Here, the user selects the prioritization criteria from amongst a time-of-day criteria 82, a mood criteria 84, a subject-matter criteria 86, and a most-listened criteria 88, In other implementations, other criteria are utilized, The user enters selection of the desired criteria, and indication of the selection is provided to the prioritizer 48 (shown in Figure 1). The time-of-day criteria causes prioritization based upon a temporal indication. That is to say, at different times of the day, the prioritization is carried out in different manners. The mood criteria provides for user selection of prioritization based upon the mood of the user, or another. The subject-matter criteria provides for selection of the prioritization criteria based upon a subject matter of interest. And, the selection of the most-listened criteria provides for prioritization based upon the media that is most frequently played-out. Selection of any of the menu items 82-88 causes additional display screens to be displayed to make specific selections within the criteria selection categories 82-88.

Figure 3 illustrates another exemplary screen display displayable upon the display screen 62. Here, a playlist 92 comprised of a plurality of media file identities 94 are displayed. The media files are listed in an ordered sequence, ordered in conformity with a prioritization made according to a selected prioritization criteria. Here, the media file identified as media file number one is the highest-prioritized media file and the media file listed there beneath are lower-prioritized. A user, viewing the top portion of the list is able quickly to identify media files that are likely to be of greatest interest to the user, The user need not inspect the entire list to locate a media file to select to play-out.

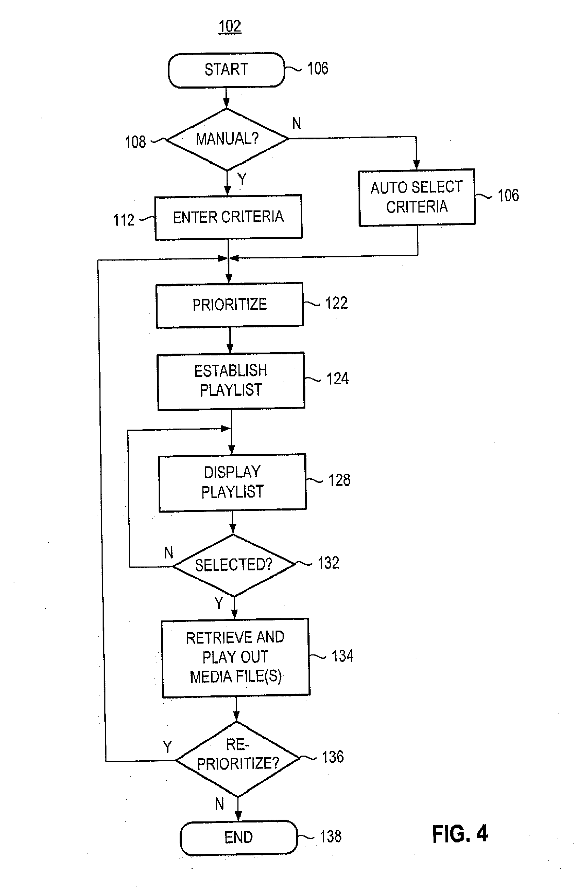

Figure 4 illustrates a process, shown generally at 102, representative of the process of operation of an implementation of the present disclosure. The process 102 facilitates selection of a media file to be played-out at an electronic device. Subsequent to start at the start block 106, a determination is made at the decision block 108 as to whether manual selection of prioritization criteria is to be made. If so, the yes branch is take to the block 112 and the prioritization criteria is entered manually. If, conversely, the manual selection is not to be made, the no branch is taken to block 116, and automatic selection procedures are utilized by which to select prioritization criteria.

Upon selection of the prioritization criteria, either manually or automatically, prioritization, of media files is performed, indicated by the block 122. And responsive to the prioritization, a playlist is established, indicated by the block 124.

Here, when the playlist is established, the playlist is displayed at a user display, indicated at the block 128. A determination is made, indicated by the decision block 132, as to whether selection is made to play-out a media file listed in the playlist. If not, the no branch is taken back to the block 128. Otherwise, if selection has been made, the yes branch is taken to the block 134, and selected media file is retrieved and played-out. Then, and as indicated at the decision block 136, a determination is made as to whether a re-prioritization operation should be carried out. If so, the yes branch is taken back to the block 122. Reprioritization permits, e.g., newly-available media files to be included in a prioritization operation and then establishment of an updated playlist. Ifre-prioritization is not to be performed, the no branch is taken to the end block 138.

Figure 5 illustrates a method flow diagram, shown generally at 152, representative of the method of operation of an implementation of the present disclosure. The method facilitates play-out of a digital media file of a plurality of digital media files at an electronic device.

First, and as indicated by the block 154, the plurality of digital media files is prioritized according to a selected prioritization criteria. Then, and as indicated by the block 158, a media-file playlist of the digital files is established responsive to the prioritization of the files. And, the playlist, once established, is used pursuant to selection of media files for play-out at a media-file player.

Due to the prioritization of the media files, a user need not search through a random list of file titles, or the like, to make selection of a media file for play-out at the player, Improved convenience of operation is thereby provided.

Presently preferred implementations of the disclosure and many of its improvements and advantages have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for an electronic device capable of playing-out a digital media file of a plurality of digital media files, said apparatus comprising:
a prioritizer configured to prioritize the plurality of digital media files according to a selected prioritization criteria;
a play lister configured to establish a media-file play list of the digital media files for presentation responsive to prioritization of the digital media files by said prioritizer,

2. The apparatus of claim 1 wherein said prioritizer is configured to prioritize the plurality of digital media files according to a manually-selected prioritization criteria;

3. The apparatus of claim 1 wherein said prioritizer is configured to prioritize the plurality of digital media files according to an automatically-selected prioritization criteria.

4. The apparatus of claim 1 wherein the selected prioritization criteria is based upon a prior play-out popularity indicia.

5. The apparatus of claim 4 further comprising a monitor configured to monitor media-file play-out of digital media files at the electronic device to obtain the prior play-out popularity indicia.

6. The apparatus of claim 5 wherein said prioritizer is further configured to deprioritize a digital media file when said monitor indicates the digital media file to have played-out at the electronic device.

7. The apparatus of claim 1 wherein the digital media content files are further identified by a content-type and wherein the selected prioritization criteria includes a content-type criteria.

8. The apparatus of claim 7 wherein the content-type identifies a content category of an associated digital media content file.

9. The apparatus of claim 7 wherein the content-type identifies a mood-type of an associated digital media content file.

10. The apparatus of claim 1 wherein said prioritizer is configured to prioritize the plurality of digital media files further according to a temporal criteria.

11. A method for facilitating play-out of a digital media file of a plurality of digital media files at an electronic device, said method comprising:
prioritizing the plurality of digital media files according to a selected prioritization criteria; and
establishing a media-file playlist of the digital files for presentation responsive to prioritization of the digital media files during said prioritizing.

12. The method of claim 11 wherein said prioritizing comprises prioritizing the plurality of digital media files according to a prior play-out popularity indicia.

13. The method of claim 12 further comprising monitoring media-file play-out of digital media files at the electronic device to obtain the prior play-out popularity indicia.

14. The method of claim 13 wherein the digital media files are categorized by a type indicia and wherein the prior play-out popularity indicia includes the type indicia of prior played-out digital media files.

15. The method of claim 11 wherein said prioritizing further comprises prioritizing the plurality of digital media files according to a temporal criteria.

## Amended claims

### Amended claims in accordance with Rule 137(2) EPC.

**1.** An apparatus (46) for an electronic device (12) capable of playing-out a digital media file of a plurality of digital media files, said apparatus (46) comprising:
a prioritizer (48) configured to prioritize the plurality of digital media files according to a selected prioritization criteria;
a monitor (56) configured to monitor operation of the electronic device (12) and to provide a monitor-result indication to said prioritizer (48), the monitor-result indication comprising indication of prior play-out of a digital media file of the plurality, the selected prioritization criteria responsive in part to the indication of the prior play-out of the digital media file; and
a play lister (52) configured to establish a media-file play list of the digital media files for presentation responsive to prioritization of the digital media files by said prioritizer.

**2.** The apparatus (46) of claim 1 wherein said prioritizer (48) is configured to prioritize the plurality of digital media files according to a manually-selected prioritization criteria.

**3.** The apparatus (46) of claim 1 wherein said prioritizer (48) is configured to prioritize the plurality of digital media files according to an automatically-selected prioritization criteria.

**4.** The apparatus (46) of claim 1 wherein the selected prioritization criteria is based upon a prior play-out popularity indicia.

**5.** The apparatus (46) of claim 4 wherein said monitor is further configured to monitor media-file play-out of digital media files at the electronic device to obtain the prior play-out popularity indicia.

**6.** The apparatus (46) of claim 5 wherein said prioritizer (48) is further configured to de-prioritize a digital media file when the monitor-result indication indicates the digital media file to have played-out at the electronic device.

**7.** The apparatus (46) of claim 1 wherein the digital media content files are further identified by a content-type and wherein the selected prioritization criteria includes a content-type criteria.

**8.** The apparatus (46) of claim 7 wherein the content-type identifies a content category of an associated digital media content file.

**9.** The apparatus (46) of claim 7 wherein the content-type identifies a mood-type of an associated digital media content file.

**10.** The apparatus (46) of claim 1 wherein said prioritizer (48) is configured to prioritize the plurality of digital media files further according to a temporal criteria.

**11.** A method (152) for facilitating play-out of a digital media file of a plurality of digital media files at an electronic device, said method comprising:
prioritizing (154) the plurality of digital media files according to a selected prioritization criteria;
monitoring operation of the electronic device;
providing a monitor-result indication that comprises indication of prior play-out of a digital media file of the plurality, the selected prioritization criteria responsive in part to the prior play-out of the digital media file; and
establishing (158) a media-file playlist of the digital files for presentation responsive to prioritization of the digital media files during said prioritizing.

**12.** The method (152) of claim 11 wherein said prioritizing comprises prioritizing the plurality of digital media files according to a prior play-out popularity indicia.

**13.** The method (152) of claim 12 wherein said monitoring further comprises monitoring media-file play-out of digital media files at the electronic device to obtain the prior play-out popularity indicia.

**14.** The method (152) of claim 13 wherein the digital media files are categorized by a type indicia and wherein the prior play-out popularity indicia includes the type indicia of prior played-out digital media files.

**15.** The method (152) of claim 11 wherein said prioritizing (154) further comprises prioritizing the plurality of digital media files according to a temporal criteria.
